(19) Europäisches Patentamt
European Patent Office
Office européen des brevets

(11) EP 4 596 628 A1

(12) **EUROPEAN PATENT APPLICATION**
published in accordance with Art. 153(4) EPC

(43) Date of publication:
**06.08.2025 Bulletin 2025/32**

(21) Application number: **23871773.0**

(22) Date of filing: **05.09.2023**

(51) International Patent Classification (IPC):
***C08L 69/00*** *(2006.01)* ***C08K 5/13*** *(2006.01)*
***C08K 5/523*** *(2006.01)* ***C08K 5/526*** *(2006.01)*
***C08L 55/02*** *(2006.01)*

(52) Cooperative Patent Classification (CPC):
**C08K 5/13; C08K 5/523; C08K 5/526; C08L 55/02; C08L 69/00**

(86) International application number:
**PCT/JP2023/032393**

(87) International publication number:
**WO 2024/070533 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022 JP 2022156342**

(71) Applicant: **Mitsubishi Engineering-Plastics Corporation**
**Tokyo 105-0021 (JP)**

(72) Inventor: **MOCHIDA, Satoshi**
**Hiratsuka-shi, Kanagawa 254-0016 (JP)**

(74) Representative: **Müller-Boré & Partner Patentanwälte PartG mbB**
**Friedenheimer Brücke 21**
**80639 München (DE)**

(54) **POLYCARBONATE RESIN COMPOSITION**

(57) A polycarbonate resin composition including: a 55 to 90 mass% polycarbonate resin (A) having a viscosity-average molecular weight of 17500 to 30000; a 10 to 45 mass% graft copolymer (B) containing an aromatic vinyl monomer component (b1), a vinyl cyanide monomer component (b2), and a diene rubber polymer component (b3); and, relative to a total mass of (A) and (B) being 100 parts by mass, 0.001 to 0.3 parts by mass of a triaryl phosphate (C) given by specific general formula (1); and 0.001 to 0.3 parts by mass of a phenolic structure-bearing compound (D), wherein the phenolic structure-bearing compound (D) contains at least one of 4-t-butylphenol, 2,4-di-t-butylphenol, 4-$\alpha$-cumylphenol, and bisphenol A.

EP 4 596 628 A1

## Description

[Technical Field]

The present invention relates to a polycarbonate resin composition and more particularly to a polycarbonate resin composition with excellent weathering resistance, and to a molded article of this polycarbonate resin composition.

[Background Art]

Polycarbonate resin has excellent mechanical properties, e.g., impact resistance and so forth, and also has excellent heat resistance, excellent transparency and so forth, and as a result is widely used in numerous applications, e.g., various optical components, components in electric and electronic equipment, automotive interior and exterior trim components, OA equipment components, sheets, mechanical components, building materials and so forth.

However, polycarbonate resin has a somewhat limited use due to its poor weathering resistance. For example, its outdoor use or indoor use under fluorescent lights causes discoloration or strength reduction of the product.

To solve this problem, various light stabilizers have conventionally been used alone or in combination. A known example of such light stabilizers is a benzotriazole-based ultraviolet absorber. However, blending such an ultraviolet absorber with polycarbonate resin causes another problem, that is, a decreased hue of a polycarbonate resin composition, which is induced by heat deterioration during melt kneading and molding operations.

Further, there have been attempts to blend various additives with polycarbonate resin to impart high functionality. For example, PTL 1 describes that fiber-reinforced polycarbonate resin compositions excellent in dimensional stability, mechanical strength and fluidity can be obtained by the admixture of 5 to 15 mass% triphenyl phosphate in 85 to 95 mass% polycarbonate resin.

With the rapid development in recent years of greater functionality and higher performance by various devices and equipment, an improvement in particular in the weathering resistance of polycarbonate resin is strongly desired.

[Citation List]

[Patent Literature]

[PTL 1] Japanese Patent No. 3308657

[Summary of Invention]

[Technical Problem]

An object of (problem for) the present invention is to provide a polycarbonate resin composition that exhibits excellent weathering resistance, favorable impact and heat resistance, and good fluidity (moldability).

[Solution to Problem]

As a result of extensive and intensive investigations in order to address this problem, the present inventor has made the present invention upon discovering that excellent weathering resistance as well as favorable impact and heat resistance is exhibited by a polycarbonate resin composition that contains a prescribed triaryl phosphate compound in a small amount relative to an polymer alloy of polycarbonate and a graft polymer such as an ABS resin.

The present invention relates to a polycarbonate resin composition and a molded article described below.

1. A polycarbonate resin composition, comprising: 55 to 90 mass% of a polycarbonate resin (A) having a viscosity-average molecular weight of 17500 to 30000; 10 to 45 mass% of a graft copolymer (B) comprising an aromatic vinyl monomer component (b1), a vinyl cyanide monomer component (b2), and a diene rubber polymer component (b3); and, relative to a total mass of (A) and (B) being 100 parts by mass,

    0.001 to 0.3 parts by mass of a triaryl phosphate (C) given by general formula (1); and 0.001 to 0.3 parts by mass of a phenolic structure-bearing compound (D),
    wherein the phenolic structure-bearing compound (D) comprises at least one of 4-t-butylphenol, 2,4-di-t-butylphenol, 4-α-cumylphenol, and bisphenol A.

[C1]

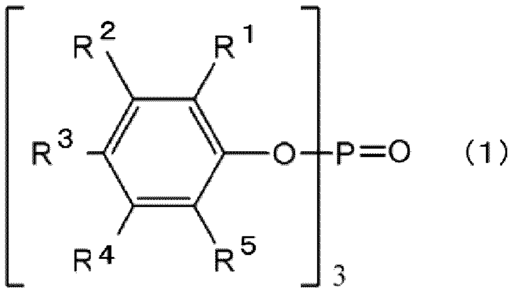

(In formula (1), $R^1$ to $R^5$ are independently a hydrogen atom or a $C_{1-12}$ alkyl group.)

2. The polycarbonate resin composition of the above 1, wherein at least one of the $R^1$ to $R^5$ on each of aromatic rings in formula (1) is a $C_{1-12}$ alkyl group.
3. The polycarbonate resin composition of the above 1, wherein the $R^1$ and $R^3$ on each of the aromatic rings in formula (1) are a $C_{1-12}$ alkyl group, and the $R^2$, $R^4$ and $R^5$ on each of the aromatic rings are a hydrogen atom.
4. The polycarbonate resin composition of the above 3, wherein the $R^1$ and $R^3$ on each of the aromatic rings in formula (1) are a t-butyl group, and the $R^2$, $R^4$ and $R^5$ on each of the aromatic rings are a hydrogen atom.
5. The polycarbonate resin composition of the above 1, wherein the triaryl phosphate (C) contains at least one of triphenyl phosphate, tris(2,4-di-t-butylphenyl)phosphate, and tris(4-t-butylphenyl)phosphate.
6. The polycarbonate resin composition of the above 1, further including 0.001 to 0.3 parts by mass of a triaryl phosphite (E) relative to the total mass of (A) and (B) being 100 parts by mass.
7. A pellet comprising the polycarbonate resin composition of any one of the above 1 to 6.
8. A molded article comprising the polycarbonate resin composition of any one of the above 1 to 6.
9. A molded article comprising the pellet of the polycarbonate resin composition of the above 7.

[Advantageous Effects of Invention]

The polycarbonate resin composition according to the present invention exhibits high weathering resistance and is excellent in impact resistance, heat resistance and fluidity (moldability).

[Description of Embodiments]

In the following, embodiments, examples, and so forth are provided in order to describe the present invention in detail.

Unless specifically indicated otherwise, in the present description "to" in the specification of a numerical value range is used in the sense of including the numerical values provided before and after the "to" as the lower limit and upper limit.

The polycarbonate resin composition according to the present invention characteristically includes: 55 to 90 mass% of a polycarbonate resin (A) having a viscosity-average molecular weight of 17500 to 30000; 10 to 45 mass% graft of a copolymer (B) containing an aromatic vinyl monomer component (b1), a vinyl cyanide monomer component (b2), and a diene rubber polymer component (b3); and, relative to a total mass of (A) and (B) being 100 parts by mass, 0.001 to 0.3 parts by mass of a triaryl phosphate (C) given by the above general formula (1); and 0.001 to 0.3 parts by mass of a phenolic structure-bearing compound (E),
wherein the phenolic structure-bearing compound (D) contains at least one of 4-t-butylphenol, 2,4-di-t-butylphenol, 4-α-cumylphenol, and bisphenol A.

[Polycarbonate Resin (A)]

The polycarbonate resin (A) used in the present invention is not particularly limited and various kinds of polycarbonate resin may be used. Polycarbonate resin can be classified into aromatic polycarbonate resin, in which each of the carbons directly bonded to the carbonate bond is an aromatic carbon, and aliphatic polycarbonate resin, in which they are aliphatic carbons, and either of these can be used. Aromatic polycarbonate resin is preferred therebetween for the polycarbonate resin (A) considering, for example, the heat resistance, mechanical properties, and electrical properties.

Of the monomers as the starting materials for aromatic polycarbonate resin, aromatic dihydroxy compounds can

be exemplified by the following:

dihydroxybenzenes, e.g., 1,2-dihydroxybenzene, 1,3-dihydroxybenzene (i.e., resorcinol), and 1,4-dihydroxybenzene; dihydroxybiphenyls, e.g., 2,5-dihydroxybiphenyl, 2,2'-dihydroxybiphenyl, and 4,4'-dihydroxybiphenyl;
Dihydroxynaphthalenes, e.g., 2,2'-dihydroxy-1,1'-binaphthyl, 1,2-dihydroxynaphthalene, 1,3-dihydroxynaphthalene, 2,3-dihydroxynaphthalene, 1,6-dihydroxynaphthalene, 2,6-dihydroxynaphthalene, 1,7-dihydroxynaphthalene, and 2,7-dihydroxynaphthalene;
Dihydroxydiaryl ethers, e.g., 2,2'-dihydroxydiphenyl ether, 3,3'-dihydroxydiphenyl ether, 4,4'-dihydroxydiphenyl ether, 4,4'-dihydroxy-3,3'-dimethyldiphenyl ether, 1,4-bis(3-hydroxyphenoxy) benzene, and 1,3-bis(4-hydroxyphenoxy)benzene;
Bis(hydroxyaryl)alkanes, e.g., 2,2-bis(4-hydroxyphenyl)propane (i.e., bisphenol A), 1,1-bis(4-hydroxyphenyl)propane, 2,2-bis(3-methyl-4-hydroxyphenyl)propane (i.e., bisphenol C), 2,2-bis(3-methoxy-4-hydroxyphenyl)propane, 2-(4-hydroxyphenyl)-2-(3-methoxy-4-hydroxyphenyl)propane, 1,1-bis(3-t-butyl-4-hydroxyphenyl)propane, 2,2-bis(3,5-dimethyl-4-hydroxyphenyl)propane, 2,2-bis(3-cyclohexyl-4-hydroxyphenyl)propane, 2-(4-hydroxyphenyl)-2-(3-cyclohexyl-4-hydroxyphenyl) propane, $\alpha,\alpha'$-bis(4-hydroxyphenyl)-1,4-diisopropylbenzene, 1,3-bis[2-(4-hydroxyphenyl)-2-propyl]benzene, bis(4-hydroxyphenyl)methane, bis(4-hydroxyphenyl)cyclohexylmethane, bis(4-hydroxyphenyl)phenylmethane, bis(4-hydroxyphenyl) (4-propenylphenyl)methane, bis(4-hydroxyphenyl)diphenylmethane, bis(4-hydroxyphenyl)naphthylmethane, 1,1-bis(4-hydroxyphenyl)ethane, 1,1-bis(4-hydroxyphenyl)-1-phenylethane, 1,1-bis(4-hydroxyphenyl)-1-naphthylethane, 1,1-bis(4-hydroxyphenyl)butane, 2,2-bis(4-hydroxyphenyl)butane, 2,2-bis(4-hydroxyphenyl)pentane, 1,1-bis(4-hydroxyphenyl)hexane, 2,2-bis(4-hydroxyphenyl)hexane, 1,1-bis(4-hydroxyphenyl)octane, 2,2-bis(4-hydroxyphenyl)octane, 4,4-bis(4-hydroxyphenyl)heptane, 2,2-bis(4-hydroxyphenyl)nonane, 1,1-bis(4-hydroxyphenyl)decane, and 1,1-bis(4-hydroxyphenyl)dodecane;
Bis(hydroxyaryl)cycloalkanes, e.g., 1,1-bis(4-hydroxyphenyl)cyclopentane, 1,1-bis(4-hydroxyphenyl)cyclohexane, 1,1-bis(4-hydroxyphenyl)-3,3-dimethylcyclohexane, 1,1-bis(4-hydroxyphenyl)-3,4-dimethylcyclohexane, 1,1-bis(4-hydroxyphenyl)-3,5-dimethylcyclohexane, 1,1-bis(4-hydroxyphenyl)-3,3,5-trimethylcyclohexane, 1,1-bis(4-hydroxy-3,5-dimethylphenyl)-3,3,5-trimethylcyclohexane, 1,1-bis(4-hydroxyphenyl)-3-propyl-5-methylcyclohexane, 1,1-bis(4-hydroxyphenyl)-3-t-butylcyclohexane, 1,1-bis(4-hydroxyphenyl)-4-t-butylcyclohexane, 1,1-bis(4-hydroxyphenyl)-3-phenylcyclohexane, and 1,1-bis(4-hydroxyphenyl)-4-phenylcyclohexane;

Cardo structure-containing bisphenols, e.g., 9,9-bis(4-hydroxyphenyl)fluorene and 9,9-bis(4-hydroxy-3-methylphenyl) fluorene;

Dihydroxydiaryl sulfides, e.g., 4,4'-dihydroxydiphenyl sulfide and 4,4'-dihydroxy-3,3'-dimethyldiphenyl sulfide; Dihydroxydiaryl sulfoxides, e.g., 4,4'-dihydroxydiphenyl sulfoxide and 4,4'-dihydroxy-3,3'-dimethyldiphenyl sulfoxide; and dihydroxydiaryl sulfones, e.g., 4,4'-dihydroxydiphenyl sulfone and 4,4'-dihydroxy-3,3'-dimethyldiphenyl sulfone.

Among the preceding, bis(hydroxyaryl)alkanes are preferred and bis(4-hydroxyphenyl)alkanes are preferred thereamong, while 2,2-bis(4-hydroxyphenyl)propane (i.e., bisphenol A) and 2,2-bis(3-methyl-4-hydroxyphenyl)propane (i.e., bisphenol C) are particularly preferred from the standpoints of impact resistance and heat resistance.
A single aromatic dihydroxy compound may be used or any combination of two or more in any ratio may be used.
Of the monomers as the starting materials for polycarbonate resin, the carbonate precursor can be exemplified by carbonyl halides and carbonate esters. A single carbonate precursor may be used or any combination of two or more in any ratio may be used.
The carbonyl halides can be specifically exemplified by phosgene and by haloformates such as the bischloroformates of dihydroxy compounds and the monochloroformates of dihydroxy compounds.
The carbonate esters can be specifically exemplified by diaryl carbonates such as diphenyl carbonate and ditolyl carbonate; dialkyl carbonates such as dimethyl carbonate and diethyl carbonate; and carbonates of dihydroxy compounds, e.g., biscarbonates of dihydroxy compounds, monocarbonates of dihydroxy compounds, and cyclic carbonates.
There are no particular limitations on the method of producing the polycarbonate resin (A), and any method can be used. Examples thereof are the interfacial polymerization method, melt transesterification method, pyridine method, ring-opening polymerization of a cyclic carbonate compound, and solid-state transesterification of a prepolymer. Among these, the polycarbonate resin (A) produced by interfacial polymerization or melt transesterification is preferred because this provides a greater improvement in the moist heat resistance, with interfacial polymerization being particularly preferred.
The molecular weight of the polycarbonate resin (A), expressed as the viscosity-average molecular weight (Mv) converted from the solution viscosity measured at a temperature of 25°C using methylene chloride as the solvent, is preferably 10000 to 50000, more preferably 10000 to 40000, still more preferably 10000 to 30000, and even more preferably 10000 to 26000, and is preferably at least 10500, more preferably at least 11000, particularly preferably at least

11500, and most preferably at least 12000, and preferably not more than 24000 and particularly preferably not more than 20000. The mechanical strength of the polycarbonate resin composition according to the present invention can be further improved by having the viscosity-average molecular weight be equal to or greater than the lower limit for the indicated range. By having the viscosity-average molecular weight be not more than the upper limit for the indicated range, reductions in the fluidity of the polycarbonate resin composition according to the present invention can be suppressed and thereby ameliorated, thus raising the molding processability and facilitating the execution of molding operations.

A mixture of two or more polycarbonate resins having different viscosity-average molecular weights may be used, in which case a polycarbonate resin having a viscosity-average molecular weight outside the aforementioned preferred range may be admixed.

The viscosity-average molecular weight [Mv] refers to the value calculated using Schnell's viscosity equation, i.e., $\eta = 1.23 \times 10^{-4} Mv^{0.83}$, wherein the intrinsic viscosity [η] (unit: dl/g) at a temperature of 25°C is determined using methylene chloride as the solvent and using a Ubbelohde viscometer. The intrinsic viscosity [η] is the value calculated using the following formula and the specific viscosity [$\eta_{sp}$] measured at each solution concentration [C] (g/dl).

[Math. 1]

$$\eta = \lim_{c \to 0} \eta_{sp} / c$$

In addition, the polycarbonate resin (A) may contain a polycarbonate oligomer in order to bring about an improved appearance for the molded article and an improvement in the fluidity. The viscosity-average molecular weight [Mv] of this polycarbonate oligomer is generally at least 1500 and is preferably at least 2000 and is generally not more than 9500 and is preferably not more than 9000. The content of the polycarbonate oligomer when contained is preferably not more than 30 mass% of the polycarbonate resin (including the polycarbonate oligomer).

The polycarbonate resin (A) may be not only a virgin starting material, but may be polycarbonate resin that has been regenerated from post-consumer products (also known as material-recycled polycarbonate resin), and also preferably contains both a virgin starting material and recycled resin, and may be composed of recycled polycarbonate resin. The proportion of recycled polycarbonate resin in the polycarbonate resin (A) is preferably at least 40%, or at least 50%, or at least 60%, or at least 80%, and may be particularly preferably 100%.

[Graft Copolymer (B)]

The graft copolymer (B) contained in the polycarbonate resin composition according to the present invention is a graft copolymer containing an aromatic vinyl monomer component (b1), a vinyl cyanide monomer component (b2), and a diene rubber polymer component (b3). The graft copolymer (B) preferably contains 40 to 80 mass% of the aromatic vinyl monomer component (b1), 10 to 30 mass% of the vinyl cyanide monomer component (b2), and 10 to 50 mass% of the diene rubber polymer component (b3), and can also contain 0 to 30 mass% of an additional monomer component (b4).

Examples of the aromatic vinyl monomer component (b1) in the graft copolymer (B) include styrene, α-methylstyrene, o-methylstyrene, p-methylstyrene, vinylxylene, ethylstyrene, dimethylstyrene, p-t-butylstyrene, vinylnaphthalene, methoxystyrene, monobromostyrene, dibromostyrene, fluorostyrene, tribromostyrene and the like; styrene is particularly preferred.

The proportion of the aromatic vinyl monomer component (b1) in 100 mass% of the graft copolymer (B) is preferably in a range of from 40 to 80 mass%, more preferably at least 45 mass%, still more preferably at least 50 mass%, particularly preferably at least 55 mass%, and is more preferably not more than 75 mass%, still more preferably not more than 70 mass%, and particularly preferably not more than 65 mass%.

Examples of the vinyl cyanide monomer component (b2) in the graft copolymer (B) include acrylonitrile, methacrylonitrile and the like; acrylonitrile is particularly preferred.

The proportion of the vinyl cyanide monomer component (b2) in 100 mass% of the graft copolymer (B) is preferably in a range of from 10 to 30 mass%, more preferably at least 12 mass%, still more preferably at least 14 mass%, particularly preferably at least 15 mass%, and is more preferably not more than 28 mass%, still more preferably not more than 26 mass%, and particularly preferably not more than 25 mass%.

Examples of the diene rubber polymer component (b3) in the graft copolymer (B) include rubber components such as polybutadiene, polyisoprene and a styrene-butadiene copolymer. The proportion of the diene rubber polymer component (b3) in 100 mass% of the graft copolymer (B) is preferably in a range of from 10 to 50 mass%, more preferably at least 13 mass%, still more preferably at least 14 mass%, particularly preferably at least 15 mass%, and is more preferably not more than 45 mass%.

The additional monomer component (b4) copolymerizable with these components may be copolymerized. In such a case, examples of the additional copolymerizable vinyl monomer include maleimide-based monomers such as maleimide, N-methylmaleimide, N-cyclohexylmaleimide and N-phenylmaleimide; acrylamide-based monomers such as acrylamide and N-methylacrylamide; unsaturated acid anhydrides such as maleic anhydride and itaconic anhydride; unsaturated acids such as acrylic acid and methacrylic acid; glycidyl acrylate; glycidyl methacrylate; 2-hydroxyethyl acrylate; 2-hydroxyethyl methacrylate; methoxypolyethylene glycol methacrylate and the like.

The proportion of the additional monomer component (b4) in 100 mass% of the graft copolymer (B) is preferably in a range of from 0 to 30 mass%, more preferably not more than 20 mass%, still more preferably not more than 10 mass%, even more preferably not more than 5 mass%, especially preferably not more than 3 mass%, and particularly preferably not more than 2 mass%.

Specific preferred examples of the graft copolymer (B) include an acrylonitrile-butadiene-styrene graft copolymer, an acrylonitrile-butadiene-styrene-$\alpha$-methylstyrene graft copolymer, an acrylonitrile·ethylene-propylene-diene·styrene copolymer and the like. Among them, an acrylonitrile-butadiene-styrene graft copolymer (ABS resin) is particularly preferred.

The graft copolymer (B) is usually produced by a polymerization process such as bulk polymerization, solution polymerization, suspension polymerization, or emulsion polymerization, and any of these processes may be used.

The content of the graft copolymer (B), relative to the total mass of the polycarbonate resin (A) and the graft copolymer (B) being 100 mass%, is 10 to 45 mass%, preferably at least 12 mass%, more preferably at least 15 mass%, and is preferably not more than 42 mass%, more preferably not more than 40 mass%. The graft copolymer (B) contained in this range helps to impart excellent heat resistance and fluidity to the resultant resin composition. If the content of the graft copolymer (B) exceeds 45 mass%, the heat resistance of the resin composition will decrease. If the content is less than 10 mass%, the fluidity will decrease.

[Triaryl Phosphate (C)]

The polycarbonate resin composition according to the present invention contains the triaryl phosphate (C) given by general formula (1). As used herein, the aryl group denotes a group that contains an aromatic group, and particularly preferably denotes a phenyl group.

[C2]

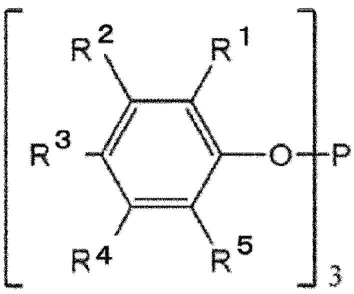

(1)

The $R^1$ to $R^5$ in formula (1) are each independently a hydrogen atom or a $C_{1-12}$ alkyl group. The $C_{1-12}$ alkyl group is preferably a $C_{1-8}$ alkyl group, for which preferred examples are a methyl group, an ethyl group, a propyl group, a n-butyl group, a t-butyl group, a pentyl group, a hexyl group, a heptyl group, and an octyl group. Among these, $C_{1-6}$ alkyl groups are preferred and $C_{1-4}$ alkyl groups are particularly preferred.

When two or more of the $R^1$ to $R^5$ on the three aromatic rings in formula (1) are an alkyl group, these alkyl groups may each be the same or different.

The triaryl phosphate (C) is preferably such that in formula (1) at least one or more of the $R^1$ to $R^5$ on each aromatic ring is a $C_{1-12}$ alkyl group.

In addition, it is more preferrable that the $R^1$ and $R^3$ on each aromatic ring are a $C_{1-12}$ alkyl group and the $R^2$, $R^4$ and $R^5$ on each aromatic ring are hydrogen atoms.

Specific examples of the triaryl phosphate (C) are triphenyl phosphate, tricresyl phosphate, trixylenyl phosphate, cresyl diphenyl phosphate, cresyl-2,6-dixylenyl phosphate, dicresyl phenyl phosphate, ethylphenyl diphenyl phosphate, diethylphenyl phenyl phosphate, propylphenyl diphenyl phosphate, dipropylphenyl phenyl phosphate, tripropylphenyl phosphate, butylphenyl diphenyl phosphate, dibutylphenyl phenyl phosphate, tributylphenyl phosphate, and so forth.

The triaryl phosphate (C) is preferably triphenyl phosphate or tris(4-t-butylphenyl)phosphate. It is preferred that

in formula (1) the $R^1$ and $R^3$ on each aromatic ring are a t-butyl group and the $R^2$, $R^4$ and $R^5$ on each aromatic ring are hydrogen atoms. The triaryl phosphate (C) is particularly preferably tris(2,4-di-t-butylphenyl)phosphate.

A single species of triaryl phosphate (C) may be used by itself, or two or more species may be used in combination.

The content of the triaryl phosphate (C) is 0.001 to 0.3 parts by mass relative to the total mass of the polycarbonate resin (A) and the graft copolymer (B) being 100 parts by mass. The resin composition containing the triaryl phosphate (C) in this amount, in conjunction with the phenolic structure-bearing compound (D) in a predetermined amount, exhibits excellent weathering resistance and also has a favorable hue. The content of the triaryl phosphate (C) is preferably at least 0.002 parts by mass, more preferably at least 0.003 parts by mass, or at least 0.004 parts by mass, and particularly preferably at least 0.005 parts by mass, and is preferably not more than 0.25 parts by mass, more preferably not more than 0.2 parts by mass, or not more than 0.15 parts by mass, or not more than 0.13 parts by mass, and particularly preferably not more than 0.1 part by mass.

[Phenolic Structure-Bearing Compound (D)]

The polycarbonate resin composition according to the present invention contains the phenolic structure-bearing compound (D).

The phenolic structure-bearing compound (D), which is a compound in which a hydroxy group is directly bonded to a benzene ring, is 4-t-butylphenol, 2,4-di-t-butylphenol, 4-$\alpha$-cumylphenol, or bisphenol A in the present invention. Among them, 4-t-butylphenol, 4-$\alpha$-cumylphenol, and 2,4-di-t-butylphenol are more preferred.

A single phenolic structure-bearing compound (D) may be contained alone, or two or more compounds (D) may be contained in combination.

The content of the phenolic structure-bearing compound (D) is 0.001 to 0.03 parts by mass relative to the total mass of the polycarbonate resin (A) and the graft copolymer (B) being 100 parts by mass. When two or more phenolic structure-bearing compounds (D) are contained, their total content is the content of the phenolic structure-bearing compound (D). The resin composition containing, in conjunction with the triaryl phosphate (C), the phenolic structure-bearing compound (D) in this amount relative to the polycarbonate resin (A) and the graft copolymer (B), exhibits high weather resistance and is excellent in impact resistance, heat resistance and fluidity (moldability).

The content of the phenolic structure-bearing compound (D), relative to the total mass of the polycarbonate resin (A) and the graft copolymer (B) being 100 parts by mass, is preferably at least 0.0015 parts by mass, more preferably at least 0.002 parts by mass, or at least 0.003 parts by mass, and particularly preferably at least 0.004 parts by mass, and is preferably not more than 0.025 parts by mass, more preferably not more than 0.02 parts by mass, or not more than 0.015 parts by mass, and particularly preferably not more than 0.013 parts by mass.

In a case where 4-t-butylphenol is contained as the phenolic structure-bearing compound (D), its content is preferably 0.0012 to 0.01 parts by mass, more preferably 0.002 to 0.003 parts by mass, relative to the total mass of (A) and (B) being 100 parts by mass.

In a case where 2,4-di-t-butylphenol is contained as the phenolic structure-bearing compound (D), its content is preferably 0.0012 to 0.01 parts by mass, more preferably 0.002 to 0.003 parts by mass, relative to the total mass of (A) and (B) being 100 parts by mass.

In a case where 4-$\alpha$-cumylphenol is contained, its content is preferably 0.0012 to 0.01 parts by mass, more preferably 0.002 to 0.003 parts by mass, relative to the total mass of (A) and (B) being 100 parts by mass.

In a case where bisphenol A is contained as the phenolic structure-bearing compound (D), its content is preferably 0.002 to 0.03 parts by mass, more preferably 0.004 to 0.01 parts by mass, relative to the total mass of (A) and (B) being 100 parts by mass.

4-t-butylphenol, 2,4-di-t-butylphenol, 4-$\alpha$-cumylphenol, or bisphenol A may be present in a free state as those used or yielded as a by-product in the production of the polycarbonate resin (A), or those derived from recycled polycarbonate resin, and the amounts of these are also included in the amount of the phenolic structure-bearing compound (D).

[Triaryl Phosphite (E)]

The polycarbonate resin composition according to the present invention preferably also contains a triaryl phosphite (E). As used herein, the aryl group denotes a group that contains a monocyclic or polycyclic aromatic group, and particularly preferably denotes a phenyl group.

Preferred examples of the triaryl phosphite (E) include triphenyl phosphite, tris(p-tolyl)phosphite, tris(p-nonylphenyl)phosphite, tris(monononyl/dinonyl·phenyl)phosphite, tris(2,4-di-t-butylphenyl)phosphite, tris(naphthyl)phosphite, tris(p-chlorophenyl) phosphite, tris(p-fluorophenyl)phosphite, diphenylbenzylphosphine, diphenyl(p-hydroxyphenyl)phosphite, diphenyl-1,4-dihydroxyphenyl-2-phosphite, phenylnaphthylbenzylphosphine and the like. Triphenyl phosphite and tris(2,4-di-t-butylphenyl)phosphite are particularly preferred.

The content of the triaryl phosphite (E) when contained is preferably 0.001 to 0.3 parts by mass relative to the total mass of the polycarbonate resin (A) and the graft copolymer (B) being 100 parts by mass. The resin composition containing the triaryl phosphite (E) in this amount in conjunction with the triaryl phosphate (C) exhibits a more favorable hue. The content of arylphosphine is more preferably at least 0.005 parts by mass, still more preferably at least 0.008 parts by mass, particularly preferably at least 0.01 part by mass, and is more preferably not more than 0.25 parts by mass, still more preferably not more than 0.2 parts by mass, or not more than 0.15 parts by mass, not more than 0.1 part by mass, or not more than 0.05 parts by mass, and particularly preferably not more than 0.04 parts by mass.

[Phenolic Antioxidant]

The polycarbonate resin composition according to the present invention preferably also contains a phenolic antioxidant.

For example, the phenolic antioxidant may preferably be a hindered phenolic antioxidant. Specific examples include pentaerythritol tetrakis[3-(3,5-di-t-butyl-4-hydroxyphenyl)propionate], octadecyl-3-(3,5-di-t-butyl-4-hydroxyphenyl)propionate, thiodiethylenebis[3-(3,5-di-t-butyl-4-hydroxyphenyl)propionate], N,N'-hexane-1,6-diylbis[3-(3,5-di-t-butyl-4-hydroxyphenyl)propionamide], 2,4-dimethyl-6-(1-methylpentadecyl)phenol, diethyl[[3,5-bis(1,1-dimethylethyl)-4-hydroxyphenyl]methyl]phosphate, 3,3',3",5,5',5"-hexa-t-butyl-a,a',a"-(mesitylene-2,4,6-triyl)tri-p-cresol, 4,6-bis(octylthiomethyl)o-cresol, ethylenebis(oxyethylene)bis[3-(5-t-butyl-4-hydroxy-m-tolyl)propionate], hexamethylenebis [3-(3,5-di-t-butyl-4-hydroxyphenyl)propionate], 1,3,5-tris(3,5-di-t-butyl-4-hydroxybenzyl)-1,3,5-triazine-2,4,6(1H,3H,5H)-trione, 2,6-di-t-butyl-4-(4,6-bis(octylthio)-1,3,5-triazine-2-ylamino) phenol, 2-[1-(2-hydroxy-3,5-di-t-pentylphenyl)ethyl]-4,6-di-t-pentylphenyl acrylate, and the like.

Among them, pentaerythritol tetrakis[3-(3,5-di-t-butyl-4-hydroxyphenyl)propionate] and octadecyl-3-(3,5-di-t-butyl-4-hydroxyphenyl)propionate are particularly preferred. A single phenolic antioxidant may be used or any combination of two or more in any ratio may be used.

The content of the phenolic antioxidant when contained, relative to the total mass of the polycarbonate resin (A) and the graft copolymer (B) being 100 parts by mass, is preferably at least 0.001 part by mass, more preferably at least 0.01 part by mass, and is preferably not more than 1 part by mass, more preferably not more than 0.5 parts by mass. The phenolic antioxidant can exert its full effect when contained in an amount equal to or greater than the lower limit for the indicated range. Also, the phenolic antioxidant allows for economic efficiency with no plateau of effect observed, when contained in an amount not greater than the upper limit for the indicated range.

[Mold-Release Agents]

The resin composition according to the present invention preferably also contains a mold-release agent.

The mold-release agent can be exemplified by aliphatic carboxylic acids, aliphatic carboxylic acid/alcohol esters, aliphatic hydrocarbon compounds having a number-average molecular weight of 200 to 15000, and polysiloxane silicone oils.

The aliphatic carboxylic acids can be exemplified by saturated or unsaturated monobasic, dibasic, or tribasic aliphatic carboxylic acids. The aliphatic carboxylic acids here also encompass alicyclic carboxylic acids. Among these, preferred aliphatic carboxylic acids are monobasic or dibasic carboxylic acids having 6 to 36 carbons, while saturated monobasic aliphatic carboxylic acids having 6 to 36 carbons are more preferred. Specific examples of these aliphatic carboxylic acids are palmitic acid, stearic acid, caproic acid, capric acid, lauric acid, arachidic acid, behenic acid, lignoceric acid, cerotic acid, melissic acid, tetratriacontanoic acid, montanic acid, adipic acid, and azelaic acid.

For example, the same aliphatic carboxylic acids as cited above can be used for the aliphatic carboxylic acid in the aliphatic carboxylic acid/alcohol ester. The alcohol, on the other hand, can be exemplified by saturated or unsaturated monohydric or polyhydric alcohols. These alcohols may have a substituent such as a fluorine atom, an aryl group, and so forth. Among the preceding, monohydric or polyhydric saturated alcohols having not more than 30 carbons are preferred, while aliphatic saturated monohydric alcohols and aliphatic saturated polyhydric alcohols, in each case having not more than 30 carbons, are more preferred. Here, aliphatic is used as a term that also encompasses alicyclic compounds.

The alcohols under consideration can be specifically exemplified by the following: octanol, decanol, dodecanol, stearyl alcohol, behenyl alcohol, ethylene glycol, diethylene glycol, glycerol, pentaerythritol, 2,2-dihydroxyperfluoropropanol, neopentylene glycol, ditrimethylolpropane, and dipentaerythritol.

The ester may contain the aliphatic carboxylic acid and/or the alcohol as impurities. In addition, the ester may be a single compound or may be a mixture of a plurality of compounds. A single aliphatic carboxylic acid or any combination in any proportion of two or more may be used for the aliphatic carboxylic acid constituting one ester by bonding therein, and a single alcohol or any combination in any proportion of two or more may be used for the alcohol constituting one ester by bonding therein.

Specific examples of the aliphatic carboxylic acid/alcohol esters are beeswax (a mixture in which melissyl palmitate is the main component), stearyl stearate, behenyl behenate, stearyl behenate, glycerol monopalmitate, glycerol monostearate, glycerol distearate, glycerol tristearate, pentaerythritol monopalmitate, pentaerythritol monostearate, pentaerythritol distearate, pentaerythritol tristearate, and pentaerythritol tetrastearate.

The aliphatic hydrocarbons having a number-average molecular weight of 200 to 15000 can be exemplified by liquid paraffins, paraffin waxes, microwaxes, polyethylene waxes, Fischer-Tropsch waxes, and oligomers of $C_{3-12}$ $\alpha$-olefins. The aliphatic hydrocarbons also encompass alicyclic hydrocarbons. These hydrocarbons may be partially oxidized.

Among the preceding, paraffin waxes, polyethylene waxes, and partially oxidized polyethylene waxes are preferred, with paraffin waxes and polyethylene waxes being more preferred.

The number-average molecular weight of the aliphatic hydrocarbon is preferably not more than 5000.

The aliphatic hydrocarbon may be a single substance; however, a mixture of aliphatic hydrocarbons having various constituent components and/or molecular weights may be used as long as the major component is in the range indicated above.

The polysiloxane silicone oils can be exemplified by dimethylsilicone oil, methylphenylsilicone oil, diphenylsilicone oil, fluoroalkylsilicone, and so forth.

A single mold-release agent as described above may be contained or any combination of two or more in any ratio may be contained.

The content of the mold-release agent, relative to the total mass of the polycarbonate resin (A) and the graft copolymer (B) being 100 parts by mass, is generally at least 0.001 part by mass, preferably at least 0.01 part by mass and is generally not more than 2 parts by mass, preferably not more than 1 part by mass, and more preferably not more than 0.5 parts by mass. The mold release effect may be unsatisfactory when the content of the mold-release agent is below the lower limit for the indicated range. On the other hand, when the content of the mold-release agent exceeds the upper limit for the indicated range, the hydrolysis resistance may be lowered and mold contamination during injection molding and so forth may be produced.

[Ultraviolet Absorbers]

The polycarbonate resin composition according to the present invention preferably also contains an ultraviolet absorber.

The ultraviolet absorber can be exemplified by inorganic ultraviolet absorbers such as cerium oxide and zinc oxide and by organic ultraviolet absorbers such as benzotriazole compounds, benzophenone compounds, salicylate compounds, cyanoacrylate compounds, triazine compounds, oxanilide compounds, malonate ester compounds, and hindered amine compounds. Among the preceding, organic ultraviolet absorbers are preferred and benzotriazole compounds are more preferred. By containing an organic ultraviolet absorber, the resin composition according to the present invention may be provided with favorable transparency and favorable mechanical properties.

The benzotriazole compounds can be specifically exemplified by 2-(2'-hydroxy-5'-methylphenyl)benzotriazole, 2-[2'-hydroxy-3',5'-bis($\alpha$,$\alpha$-dimethylbenzyl)phenyl]-benzotriazole, 2-(2'-hydroxy-3',5'-di-t-butylphenyl)benzotriazole, 2-(2'-hydroxy-3'-t-butyl-5'-methylphenyl)-5-chlorobenzotriazole, 2-(2'-hydroxy-3',5'-di-t-butylphenyl)-5-chlorobenzotriazole, 2-(2'-hydroxy-3',5'-di-t-amyl)benzotriazole, 2-(2'-hydroxy-5'-t-octylphenyl)benzotriazole, and 2,2'-methylenebis [4-(1,1,3,3-tetramethylbutyl)-6-(2H-benzotriazol-2-yl)phenol], among which 2-(2'-hydroxy-5'-t-octylphenyl)benzotriazole and 2,2'-methylenebis[4-(1,1,3,3-tetramethylbutyl)-6-(2H-benzotriazol-2-yl)phenol] are preferred and 2-(2'-hydroxy-5'-t-octylphenyl)benzotriazole is particularly preferred.

The benzophenone compounds can be specifically exemplified by 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-n-dodecyloxybenzophenone, bis(5-benzoyl-4-hydroxy-2-methoxyphenyl)methane, 2,2'-dihydroxy-4-methoxybenzophenone, and 2,2'-dihydroxy-4,4'-dimethoxybenzophenone.

The salicylate compounds can be specifically exemplified by phenyl salicylate and 4-t-butylphenyl salicylate.

The cyanoacrylate compounds can be specifically exemplified by ethyl 2-cyano-3,3-diphenylacrylate and 2-ethylhexyl 2-cyano-3,3-diphenylacrylate.

The oxanilide compounds can be specifically exemplified by 2-ethoxy-2'-ethyloxalic acid bisanilide.

The malonate ester compounds are preferably esters of 2-(alkylidene)malonic acid, with esters of 2-(1-arylalkylidene)malonic acid being more preferred.

The content of the ultraviolet absorber when contained, relative to the total mass of the polycarbonate resin (A) and the graft copolymer (B) being 100 parts by mass, is generally at least 0.05 parts by mass, preferably at least 0.1 part by mass and is generally not more than 1 part by mass, preferably not more than 0.5 parts by mass. The improvement in the weathering resistance and light resistance may not be adequate if the content of the ultraviolet absorber is less than the lower limit for the indicated range, while, e.g., mold deposits and so forth may be produced and mold contamination may be

caused if the content of the ultraviolet absorber exceeds the upper limit for the indicated range.

A single ultraviolet absorber may be contained or any combination of two or more in any ratio may be contained.

[Additives, etc.]

The polycarbonate resin composition according to the present invention may contain additives other than those described above, e.g., additives such as fluorescent brighteners, pigments (including titanium oxide, etc.), dyes, flame retardants, impact resistance enhancers, plasticizers, compatibilizers, and so forth. A single one of these additives or two or more of these additives may be contained.

In addition, resin other than the polycarbonate resin (A) and the graft copolymer (B) may also be contained. Such additional resin can be exemplified by thermoplastic polyester resin, e.g., polyethylene terephthalate, polytrimethylene terephthalate, and polybutylene terephthalate; styrenic resin such as polystyrene resin (GPPS), high-impact polystyrene resin (HIPS), and acrylonitrile-styrene copolymers (AS resin); polyolefin resin such as polyethylene resin and polypropylene resin; polyamide resin; polyimide resin; polyetherimide resin; polyurethane resin; polyphenylene ether resin; polyphenylene sulfide resin; polysulfone resin; and polymethacrylate resin.

The content of the resin other than the polycarbonate resin (A) and the graft copolymer (B) when contained, relative to the total mass of the polycarbonate resin (A) and the graft copolymer (B) being 100 parts by mass, is preferably not more than 20 parts by mass, more preferably not more than 10 parts by mass, still more preferably not more than 5 parts by mass, and particularly not more than 3 parts by mass.

[Examples]

In order to confirm the effects of the polycarbonate resin composition according to the present invention, polycarbonate resin compositions were produced as described below; however, the present invention is not to be understood as being limited to or by the examples that follow.

The following Table 1 provides the components that were used.

[Table 1]

| Component | Code | |
|---|---|---|
| PC resin (A) | A1 | Aromatic polycarbonate resin obtained by interfacial polymerization method with bisphenol A as starting material "S-3000F" from Mitsubishi Engineering-Plastics Corp. Mv = 23000 |
| | A2 | Aromatic polycarbonate resin obtained by interfacial polymerization method with bisphenol A as starting material "H-4000F" from Mitsubishi Engineering-Plastics Corp. Mv = 16000 |
| | A3 | Recycled aromatic polycarbonate resin, recovered from market, "PC2010ANC" from Shanghai Ausell Material Technology Co. Mv = 23000 |
| Copolymer (B) | B1 | ABS resin; "SXH330", emulsion polymerization product, from NIPPON A&L. |
| | B2 | ABS resin; "UT-61", bulk polymerization product, from NIPPON A&L. |
| Triaryl phosphate (C) | C1 | Tris(2,4-di-t-butylphenyl)phosphate from Toronto Research Chemicals, Inc. |
| | C2 | Tris(4-t-butylphenyl)phosphate from FUJIFILM Wako Pure Chemical Corp. |
| | C3 | Triphenyl phosphate from Tokyo Chemical Industry Co. |
| | C4 | Tri-m-cresyl phosphate from Tokyo Chemical Industry Co. |
| Phenolic structure-bearing compound (D) | D1 | 4-t-butylphenol |
| | D2 | 2,4-di-t-butylphenol |
| | D3 | 4-$\alpha$-cumylphenol |
| Triaryl phosphite (E) | E1 | Tris(2,4-di-t-butylphenyl)phosphite "ADK STAB 2112" from ADEKA Corp. |
| Phenolic antioxidant | F1 | Pentaerythritol tetrakis[3-(3,5-di-t-butyl-4-hydroxyphenyl)propionate] "IRG 1010" from BASF |

(continued)

| Component | Code | |
|---|---|---|
| Mold-release agent | G1 | Stearyl stearate; "UNISTER M-9676" from NOF CORP. |
| | G2 | Pentaerythritol tetrastearate; "VPG 861" from Emery Oleochemicals |
| Titanium Oxide | H1 | "PFC310" from ISHIHARA SANGYO KAISHA, LTD. |

(Examples 1 to 17 and Comparative Examples 1 to 8)

The components specified above were blended in the proportions (parts by mass) indicated in the following Table 2 et seq. and fed to a biaxial extruder ("TEM26SX" from Toshiba Machine Co., Ltd.), where they were kneaded at a screw rotation rate of 150 rpm, a discharge rate of 25 kg/hr, and a barrel temperature of 260°C and were extruded in a strand form from the tip of an extrusion nozzle. The thus-obtained strand was quenched in a water tank and then cut and pelletized with a pelletizer, resulting in pellets of a polycarbonate resin composition.

<MVR>

The pellets obtained in the above-described manner were dried at 100°C for five hours, followed by measurement of MVR, or melt volume rate, (unit: g/10 min) at a measurement temperature of 250°C and a load of 2.16 kgf in accordance with ISO 1133.

<Notched Charpy Strength>

The pellets obtained in the above-described manner were dried at 100°C for five hours and then injection molded at a cylinder temperature of 260°C and a mold temperature of 60°C using an injection molding machine ("NEX80III" from NISSEI PLASTIC INDUSTRIAL CO., LTD.), resulting in an ISO multipurpose test specimen (4 mmt).

The ISO multipurpose test specimen (4 mmt) thus obtained was used to measure notched Charpy strength (unit: $kJ/m^2$) at a temperature of 23°C in accordance with ISO 179.

<Heat Resistance DTUL (Deflection Temperature Under Load)>

In accordance with ISO 75-1 and ISO 75-2, a constant bending load (1.80 MPa) was applied flatwise to the 4 mm×10 mm ISO multipurpose test specimen (4 mmt) at midspan, followed by measurement of the temperature (unit: °C) at which the distortion of the test specimen at midspan reached 0.34 mm as the temperature was increased at a constant rate.

<Weathering Resistance (ΔE)>

The pellets obtained were injection molded at a cylinder temperature of 260°C and a mold temperature of 60°C using an injection molding machine, "EC50SXII" from Toshiba Machine Co., Ltd., resulting in a plate-shaped molded article with a width of 60 mm, a depth of 90 mm and a thickness of 2 mm.

The thus-obtained plate-shaped molded article was subjected to light resistance treatment with light having a wavelength of 300 to 400 nm and an irradiation intensity of about 55 $W/m^2$ at a temperature of 89°C for 100 hours (or 300 hours for those containing titanium oxide) using a xenon weatherometer ("Ci4400" from Atlas Electric Devices Company). The hue of the plate-shaped molded article was measured before and after the light resistance treatment under reflection conditions of D65 illuminant and 10° viewing angle using "SE6000" from NIPPOIN DENSHOKU INDUSTRIES CO., LTD., and the color difference ΔE was obtained for the evaluation of light resistance.

The color difference ΔE is preferably not more than 7.5, or is preferably not more than 1.4 when titanium oxide is contained.

The evaluation results are shown in the following Table 2 et seq.

[Table 2]

| Component | Code | Example | | | | | | |
|---|---|---|---|---|---|---|---|---|
| | | 1 | 2 | 3 | 4 | 5 | 6 | 7 |
| PC resin (A) | A1 | 70 | 70 | 70 | 70 | 70 | 70 | 70 |
| | A2 | | | | | | | |
| | A3 | | | | | | | |
| Copolymer (B) | B1 | | | | | | | |
| | B2 | 30 | 30 | 30 | 30 | 30 | 30 | 30 |
| Triaryl phosphate (C) | C1 | | | | | | | |
| | C2 | | | | 0.03 | | | |
| | C3 | 0.03 | 0.03 | 0.03 | | 0.03 | | |
| | C4 | | | | | | 0.03 | 0.03 |
| Phenolic structure-bearing compound (D) | D1 | 0.002 | | | 0.002 | 0.002 | 0.002 | 0.002 |
| | D2 | | 0.010 | | | | | |
| | D3 | | | 0.002 | | | | |
| Triaryl phosphite (E) | E1 | | | | | | | |
| Phenolic antioxidant | F1 | 0.05 | 0.05 | 0.05 | 0.05 | | 0.05 | |
| Mold-release agent | G1 | 0.08 | 0.08 | 0.08 | 0.08 | 0.08 | 0.08 | 0.08 |
| | G2 | 0.08 | 0.08 | 0.08 | 0.08 | 0.08 | 0.08 | 0.08 |
| MVR (g/10min) | | 9.3 | 9.6 | 9.4 | 9.6 | 9.4 | 9.6 | 9.4 |
| Notched Charpy (kJ/$m^2$) | | 50 | 51 | 52 | 51 | 50 | 51 | 50 |
| DTUL (°C) | | 108 | 108 | 108 | 108 | 108 | 108 | 108 |
| ΔE (100 hrs) | | 7.4 | 7.4 | 7.4 | 7.3 | 7.3 | 7.3 | 7.3 |

[Table 3]

| Component | Code | Example | | | | | |
|---|---|---|---|---|---|---|---|
| | | 8 | 9 | 10 | 11 | 12 | 13 |
| PC resin (A) | A1 | 70 | 70 | 70 | | 70 | 70 |
| | A2 | | | | | | |
| | A3 | | | | 70 | | |
| Copolymer (B) | B1 | | | | | 30 | 30 |
| | B2 | 30 | 30 | 30 | 30 | | |
| Triaryl phosphate (C) | C1 | 0.03 | 0.03 | 0.03 | | | |
| | C2 | | | | | | |
| | C3 | | | | 0.03 | 0.03 | 0.03 |
| | C4 | | | | | | |
| Phenolic structure-bearing | D1 | 0.002 | 0.002 | 0.002 | | 0.002 | |
| | D2 | | | | 0.010 | | 0.002 |
| | D3 | | | | | | |
| Triaryl phosphite (E) | E1 | | 0.03 | 0.01 | | | |
| Phenolic antioxidant | F1 | 0.05 | 0.05 | 0.05 | 0.05 | 0.05 | 0.05 |

(continued)

| | | Example | | | | | |
|---|---|---|---|---|---|---|---|
| Component | Code | 8 | 9 | 10 | 11 | 12 | 13 |
| Mold-release agent | G1 | 0.08 | 0.08 | 0.08 | 0.08 | 0.08 | 0.08 |
| | G2 | 0.08 | 0.08 | 0.08 | 0.08 | 0.08 | 0.08 |
| MVR (g/10 min) | | 9.6 | 9.6 | 9.2 | 9.1 | 7.8 | 7.6 |
| Notched Charpy | | 51 | 51 | 51 | 49 | 44 | 47 |
| DTUL (°C) | | 108 | 108 | 108 | 108 | 108 | 108 |
| ΔE (100 hrs) | | 7.4 | 7.4 | 7.4 | 7.3 | 6.5 | 6.4 |

[Table 4]

| | | Comparative Example | | | | | |
|---|---|---|---|---|---|---|---|
| Component | Code | 1 | 2 | 3 | 4 | 5 | 6 |
| PC resin (A) | A1 | 70 | 70 | 70 | 70 | 70 | |
| | A2 | | | | | | 70 |
| | A3 | | | | | | |
| Copolymer (B) | B1 | | | | | | |
| | B2 | 30 | 30 | 30 | 30 | 30 | 30 |
| Triaryl phosphate (C) | C1 | | | | | | |
| | C2 | | | | | | |
| | C3 | 0.0003 | | | | 1.0 | 0.03 |
| | C4 | | | | | | |
| Phenolic structure-bearing | D1 | | 0.002 | | 0.002 | | 0.002 |
| | D2 | | | | | | |
| | D3 | | | | | | |
| Triaryl phosphite (E) | E1 | | | 0.03 | 0.03 | | |
| Phenolic antioxidant | F1 | 0.05 | 0.05 | 0.05 | 0.05 | 0.05 | 0.05 |
| Mold-release agent | G1 | 0.08 | 0.08 | 0.08 | 0.08 | 0.08 | 0.08 |
| | G2 | 0.08 | 0.08 | 0.08 | 0.08 | 0.08 | 0.08 |
| MVR (g/10 min) | | 9.3 | 9.4 | 9.2 | 9.4 | 11 | 26 |
| Notched Charpy | | 47 | 45 | 42 | 45 | 30 | 17 |
| DTUL (°C) | | 108 | 108 | 108 | 108 | 107 | 105 |
| ΔE (100 hrs) | | 7.9 | 8.2 | 7.7 | 7.7 | 8.3 | 7.8 |

[Table 5]

| | | Example | |
|---|---|---|---|
| Component | Code | 14 | 15 |
| PC resin (A) | A1 | 70 | 70 |
| | A2 | | |
| | A3 | | |
| Copolymer (B) | B1 | 30 | 30 |
| | B2 | | |

(continued)

| | | Example | |
|---|---|---|---|
| Component | Code | 14 | 15 |
| Triaryl phosphate (C) | C2 | 0.03 | 0.03 |
| Phenolic structure-bearing compound (D) | D1 | 0.002 | |
| | D2 | | 0.002 |
| Triaryl phosphite (E) | E1 | | |
| Phenolic antioxidant | F1 | 0.05 | 0.05 |
| Mold-release agent | G1 | 0.08 | 0.08 |
| | G2 | 0.08 | 0.08 |
| MVR (g/10 min) | | 7.8 | 7.6 |
| Notched Charpy (kJ/m$^2$) | | 44 | 47 |
| DTUL (°C) | | 108 | 108 |
| ΔE (100 hrs) | | 6.5 | 6.4 |

[Table 6]

| | | Example | | Comparative Example | |
|---|---|---|---|---|---|
| Component | Code | 16 | 17 | 7 | 8 |
| PC resin (A) | A1 | 70 | 70 | 70 | 70 |
| | A2 | | | | |
| | A3 | | | | |
| Copolymer (B) | B1 | | | | |
| | B2 | 30 | 30 | 30 | 30 |
| Triaryl phoaphate (C) | | 0.03 | 0.03 | | |
| t-butylphenol | D1 | | | | |
| | D2 | 0.002 | 0.002 | 0.002 | 0.002 |
| Triaryl phosphite (E) | E1 | | | | |
| Phenolic antioxidant | F1 | 0.05 | 0.05 | 0.05 | 0.05 |
| Mold-releae agent | G1 | 0.08 | 0.08 | 0.08 | 0.08 |
| | G2 | 0.08 | 0.08 | 0.08 | 0.08 |
| Titanium oxide | H1 | 7.6 | 9.9 | 7.6 | 9.9 |
| MVR (g/10 min) | | 7.1 | 7.1 | 9.3 | 9.3 |
| Notched Charpy (kJ/m$^2$) | | 40 | 40 | 40 | 41 |
| DTUL (°C) | | 108 | 108 | 108 | 108 |
| ΔE (300 hrs) | | 1.3 | 1.1 | 1.6 | 1.4 |

[Industrial Applicability]

The polycarbonate resin composition according to the present invention exhibits high weathering resistance with excellent impact resistance, heat resistance and fluidity (moldability), and as a consequence can be advantageously used for various and diverse molded articles.

## Claims

1. A polycarbonate resin composition, comprising: 55 to 90 mass% of a polycarbonate resin (A) having a viscosity-average molecular weight of 17500 to 30000; 10 to 45 mass% of a graft copolymer (B) comprising an aromatic vinyl monomer component (b1), a vinyl cyanide monomer component (b2), and a diene rubber polymer component (b3); and, relative to a total mass of (A) and (B) being 100 parts by mass,

   0.001 to 0.3 parts by mass of a triaryl phosphate (C) given by general formula (1); and 0.001 to 0.3 parts by mass of a phenolic structure-bearing compound (D),
   wherein the phenolic structure-bearing compound (D) comprises at least one of 4-t-butylphenol, 2,4-di-t-butylphenol, 4-α-cumylphenol, and bisphenol A.

   [C1]

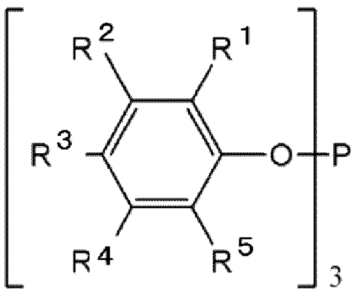

(1)

   (In formula (1), $R^1$ to $R^5$ are independently a hydrogen atom or a $C_{1-12}$ alkyl group.)

2. The polycarbonate resin composition of claim 1, wherein at least one of the $R^1$ to $R^5$ on each of aromatic rings in formula (1) is a $C_{1-12}$ alkyl group.

3. The polycarbonate resin composition of claim 1, wherein the $R^1$ and $R^3$ on each of the aromatic rings in formula (1) are a $C_{1-12}$ alkyl group, and the $R^2$, $R^4$ and $R^5$ on each of the aromatic rings are hydrogen atoms.

4. The polycarbonate resin composition of claim 3, wherein the $R^1$ and $R^3$ on each of the aromatic rings in formula (1) are a t-butyl group, and the $R^2$, $R^4$ and $R^5$ on each of the aromatic rings are hydrogen atoms.

5. The polycarbonate resin composition of claim 1, wherein the triaryl phosphate (C) comprises at least one of triphenyl phosphate, tris-2,4-di-t-butylphenylphosphate, and tris-4-t-butylphenylphosphate.

6. The polycarbonate resin composition of claim 1, further comprising 0.001 to 0.3 parts by mass of a triaryl phosphite (E) relative to the total mass of (A) and (B) being 100 parts by mass.

7. A pellet comprising the polycarbonate resin composition of any one of claims 1 to 6.

8. A molded article comprising the polycarbonate resin composition of any one of claims 1 to 6.

9. A molded article comprising the pellet of the polycarbonate resin composition of claim 7.

**INTERNATIONAL SEARCH REPORT**

International application No.
**PCT/JP2023/032393**

**A. CLASSIFICATION OF SUBJECT MATTER**

***C08L 69/00***(2006.01)i; ***C08K 5/13***(2006.01)i; ***C08K 5/523***(2006.01)i; ***C08K 5/526***(2006.01)i; ***C08L 55/02***(2006.01)i
FI: C08L69/00; C08K5/13; C08K5/523; C08K5/526; C08L55/02

According to International Patent Classification (IPC) or to both national classification and IPC

**B. FIELDS SEARCHED**

Minimum documentation searched (classification system followed by classification symbols)

C08L69/00; C08K5/13; C08K5/523; C08K5/526; C08L55/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2013/118624 A1 (IDEMITSU KOSAN CO., LTD.) 15 August 2013 (2013-08-15) claim 1, paragraphs [0002], [0006], example 6 | 1-9 |
| Y | WO 2018/116607 A1 (MITSUBISHI ENGINEERING PLASTICS CORP.) 28 June 2018 (2018-06-28) claim 1, paragraph [0007], example 12 | 1-9 |
| A | WO 2019/151497 A1 (TEIJIN LTD.) 08 August 2019 (2019-08-08) entire text | 1-9 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 September 2023** | **10 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/032393**

| Patent document cited in search report | Publication date (day/month/year) | Patent family member(s) | Publication date (day/month/year) |
|---|---|---|---|
| WO 2013/118624 A1 | 15 August 2013 | CN 104125985 A<br>KR 10-2014-0127208 A<br>TW 201335227 A | |
| WO 2018/116607 A1 | 28 June 2018 | US 2020/0071519 A1<br>claim 1, paragraph [0010], example 12<br>EP 3556809 A1<br>CN 110088200 A | |
| WO 2019/151497 A1 | 08 August 2019 | TW 201940591 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3308657 B